# EUROPEAN PATENT SPECIFICATION

(11) **EP 3 482 995 B1**
(45) Date of publication and mention of the grant of the patent: **11.10.2023**
(21) Application number: 17824164.2
(22) Date of filing: 30.06.2017
(51) Int. Cl.: B60L 15/40, B60L 7/24, B60T 8/17, B61L 27/00, B60L 7/26, B60L 15/20, B60T 7/12, B60T 8/172

(54) **TRAIN CONTROL DEVICE, METHOD, AND PROGRAM**
ZUGSTEUERUNGSVORRICHTUNG, -VERFAHREN UND -PROGRAMM
DISPOSITIF, PROCÉDÉ ET PROGRAMME DE COMMANDE DE TRAIN

(30) Priority: 05.07.2016 JP 2016133524
(43) Date of publication of application: 15.05.2019
(73) Proprietor: Kabushiki Kaisha Toshiba, Minato-ku Tokyo 105-8001 (JP); Toshiba Infrastructure Systems & Solutions Corporation, Kawasaki-shi, Kanagawa 212-8585 (JP)
(72) Inventor: YAMAMOTO, Junko, Tokyo 105-8001 (JP); IBA, Satoshi, Tokyo 105-8001 (JP); HATTORI, Yohei, Tokyo 105-8001 (JP); MIYAJIMA, Yasuyuki, Tokyo 105-8001 (JP)
(74) Representative: AWA Sweden AB
(86) International application number: PCT/JP2017/024234
(87) International publication number: WO 2018/008560

(56) References cited:
- WO-A1-2011/055470
- GB-A- 2 474 934
- JP-A- H0 690 508
- JP-A- H06 209 503
- JP-A- H07 245 815
- JP-A- 2000 305 626
- JP-A- 2006 320 037
- JP-A- 2009 225 589
- JP-A- 2012 105 438
- JP-A- 2013 172 604
- JP-B2- 2 690 220
- US-A1- 2013 006 452

## Description

### FIELD

Embodiments of the present invention relate generally to a train control device and method, and a computer program product.

### BACKGROUND

In recent years, automatic train operation systems and train automatic stop-position controllers that handle only position stop control among the functions of the automatic train operation systems have been continuously deployed.

This aims to reduce burdens on train operators, personnel expenses by operation without conductors, and achieve stable train operation including accurately stopping trains at platform-door positions regardless of train operators' skills to prevent delay due to stop-position adjustments.

A known automatic train stop control method at certain position of a station is to control the trains to run at the speed following a target deceleration pattern generated based on certain deceleration. One known solution is disclosed in US2013/0006452A1.

In order to accurately stop trains at certain positions in the case of proportional control, for example, trains' following performance may be enhanced by increasing a proportional gain or by proportional integral control. However, control systems with high gain are likely to become unstable, which may deteriorate stop accuracy and passengers' comfortability on the train.

After the train sufficiently decreases in speed through the speed following control, the train control following the target deceleration pattern may be switched to stop-position control for adjusting brake notches for each control period to stop the train at a target stop position. This may however disrupt the notch operation due to the switching of the controls, and unnecessary shift-ups and shift-downs of the notch may deteriorate the passengers' comfortability.

An object of the present invention is to provide a train control device and method and a program which can prevent deterioration of passengers' comfortability due to disrupted notch operation under train automatic stop-position control.

### BRIEF DESCRIPTION OF DRAWINGS

FIG. 1 is a schematic configuration block diagram of a train control system according to an embodiment.
FIG. 2 illustrates a relationship between a target deceleration pattern and a train automatic stop-position control.
FIG. 3 is a flowchart of processing in a first embodiment.
FIG. 4 illustrates an example of setting of a positional-deviation allowable value.
FIG. 5 is a flowchart of a brake-command selecting process.
FIG. 6 is an explanatory diagram of exemplary selected brake command candidates.
FIG. 7 is a flowchart of processing in a second embodiment.
FIG. 8 is a flowchart of a brake-command selecting process of the second embodiment.

### DETAILED DESCRIPTION

The invention is defined by the appended independent claims, with embodiments being set forth in the appended dependent claims, in the following description and in the drawings.

According to one embodiment, in general, a train control device includes a train-speed position detector configured to detect a speed and a position of a train that includes a driving and braking control device for controlling driving and braking of the train; and a control-command calculator configured to calculate a positional deviation of the train on the basis of a result of the detection of the train-speed position detector, a train-speed estimate, a train-position estimate, and a certain target deceleration pattern, and to select a control command for the driving and braking control device on the basis of the calculated positional deviation. The train-position estimate is an estimated value of the speed of the train after a certain length of time. The train-position estimate is an estimated value of the position of the train after the certain length of time. The certain target deceleration pattern is preset for stopping the train at a certain position.

Exemplary embodiments of a train control system will be described with reference to the accompanying drawings.

### First Embodiment

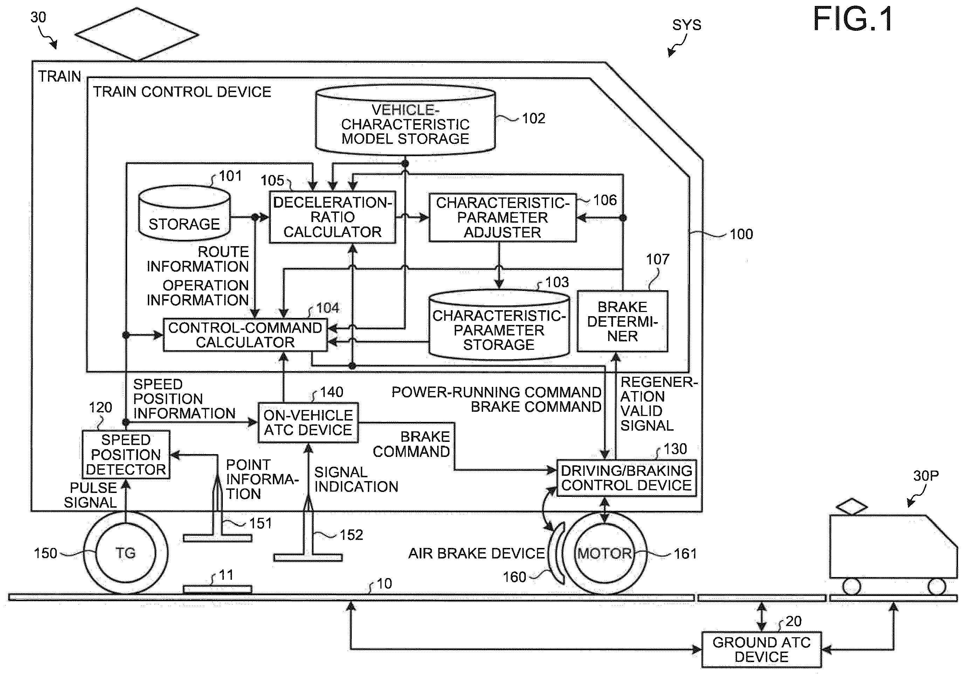

FIG. 1 is a schematic configuration block diagram of a train control system according to a first embodiment. A train control system SYS includes a pair of rails 10, a ground ATC device 20, and a train 30.

Between the rails 10, a ground element 11 is provided. The ground element 11 stores therein point information and can transmit signals to an on-train element 151 of the train 30.

The ATC ground device 20 detects the presence of a train on the rails in each block section via the rails (track circuit) 10 and transmits, from the rails 10, a signal indication corresponding to presence or absence of the train on the rails to an on-vehicle ATC device 140 via a receiver 152.

The train 30 is provided with a speed generator (TG) 150, a motor 161, an air brake device 160, the receiver 152, and the on-train element 151. The wheels are driven and braked by the motor 161 and the air brake device 160, whereby the train 30 travels on the rails 10. The motor 161 can apply brakes, serving as a regenerative brake.

The train 30 includes a train control device 100, a speed position detector 120, the on-vehicle ATC device 140, and a driving/braking control device 130.

The train control device 100 includes a storage 101, a vehicle-characteristic model storage 102, a characteristic-parameter storage 103, a control-command calculator 104, a deceleration-ratio calculator 105, a characteristic-parameter adjuster 106, and a brake determiner 107. The train control device 100 uses the above elements to calculate a brake command for stopping the train 30 at a certain position (target stop position) of a station and outputs the brake command to the driving/braking control device 130. The train control device 100 may further calculate a power-running command and a brake command for operating the train to travel between stations while maintaining the speed under speed limits.

The storage 101 stores therein route information and operation information. The route information includes gradients of a route, curves (radii of curvatures), speed limit information and block length (distance of block section) of each block section, and linear information (alignment of block sections). The operation information includes a target stop position of each station, stops for each operation type, and certain traveling time between the stations.

The vehicle-characteristic model storage 102 stores therein vehicle information. The vehicle information includes the length and weight of the train 30,acceleration and deceleration characteristics (acceleration characteristic model and deceleration characteristic model) in response to the power-running command and the brake command, air resistance information, gradient resistance information, curve resistance information, and start and end of electro-pneumatic switching.

A deceleration characteristic model MD includes specified deceleration, dead time, and time constant corresponding to each brake command (notch), and is stored for each type of brakes. In the present embodiment, the stored deceleration characteristic model MD represents a first deceleration characteristic model MD1 to be used when a regenerative brake is applied and a second deceleration characteristic model MD2 to be used when an air brake is applied.

The first deceleration characteristic model MD1 in combination with a first characteristic parameter PR1, as described later, are used to derive the deceleration of the train 30 in consideration of a response delay when the motor 161 applies a regenerative brake in response to a brake command.

The second deceleration characteristic model MD2 in combination with a second characteristic parameter PR2, as described later, are used to derive the deceleration of the train 30 in consideration of a response delay when the air brake device 160 applies an air brake in response to a brake command.

The air resistance information is information representing the deceleration due to air resistance based on the speed of the train 30, the gradient resistance information is information representing the deceleration due to gradient resistance based on the gradient, and the curve resistance information is information representing the deceleration due to curve resistance based on the curvature.

The characteristic-parameter storage 103 stores therein a characteristic parameter PR for each of the regenerative brake and the air brake. The characteristic parameter PR is a parameter for correcting the deceleration characteristic model stored in the vehicle-characteristic model storage 102 to an actual deceleration characteristics of the train 30 for use. In the present embodiment, the stored characteristic parameters PR are the first characteristic parameter PR1 for the regenerative brake and the second characteristic parameter PR2 for the air brake.

The present embodiment describes an example in which the information containing the combined characteristic parameter PR and deceleration characteristic model MD is used as deceleration information (= deceleration pattern) indicating the deceleration of the train when the brake is applied.

However, it is not intended to limit the deceleration information to the combination of the characteristic parameter PR and the deceleration characteristic model MD. For example, the deceleration characteristic model MD may be copied to the characteristic-parameter storage 103 from the vehicle-characteristic model storage 102, and the characteristic-parameter adjuster 106 may directly adjust the copied deceleration characteristic model MD in place of the characteristic parameter PR, and calculate the deceleration of the train from only the adjusted deceleration characteristic model MD.

The control-command calculator 104 calculates a brake command for stopping the train 30 at a target stop position, on the basis of the speed and position of the train 30 detected by the speed position detector 120, the route information and operation information read from the storage 101, the vehicle information read from the vehicle-characteristic model storage 102, and the characteristic parameter read from the characteristic-parameter storage 103.

Which one of the combinations of the first deceleration characteristic model MD1 and the first characteristic parameter PR1 and the second characteristic parameter PR2 and the second deceleration characteristic model MD2 to be used is determined on the basis of a result of the determination of the brake determiner 107.

Thus, the control-command calculator 104 in the present embodiment calculates a brake command for the train 30 in accordance with the current speed and position of the train 30, the deceleration characteristic model MD, and the characteristic parameter PR, so as to stop the train 30 at the target stop position that is based on the route information and the operation information.

The deceleration-ratio calculator 105 calculates a deceleration ratio indicating a difference between an actual deceleration due to the brake and the deceleration calculated from the deceleration characteristic model when the brake is applied in response to the brake command. The deceleration-ratio calculator 105 in the present embodiment calculates the deceleration ratio by different methods according to which of the air brake and the regenerative brake is being applied. In the present embodiment, although the deceleration ratio is calculated in consideration of the gradient resistance, the curve resistance, and the air resistance of the train 30, the curve resistance of the train 30 does not need to be used.

The characteristic-parameter adjuster 106 adjusts the characteristic parameter (the first characteristic parameter PR1 or the second characteristic parameter PR2) in accordance with the deceleration ratio calculated by the deceleration-ratio calculator 105. The characteristic parameter is one item of the deceleration information to derive a brake command and is stored in the characteristic-parameter storage 103.

The deceleration ratio calculated by the deceleration-ratio calculator 105 is an example of degree of deceleration indicating the difference between the actual deceleration of the train 30 and the deceleration of the train 30 calculated based on the deceleration characteristic model MD. Alternatively, the difference may be represented by deviation (deceleration difference) in place of ratio (deceleration ratio), for example. In this case, the characteristic parameter is also adjusted as an index indicating the deviation in deceleration. Corresponding characteristic parameters may be prepared for the dead time and the time constant of the deceleration characteristic model, so that the deceleration-ratio calculator 105 calculates the ratio or the deviation and the characteristic-parameter adjuster 106 adjusts characteristic parameters, as with the deceleration.

The brake determiner 107 determines, based on a regeneration valid signal from the driving/braking control device 130, which of the regenerative brake and the air brake is in operation. For example, the brake determiner 107 determines that the regenerative brake is in operation when the regeneration valid signal is in ON state and that the air brake is in operation when the regeneration valid signal is in OFF state.

The train control device 100 may further include a target-speed calculator for controlling the train to run between stations following the speed limit, and a travelschedule calculator for allowing the train to run between the stations in a preset length of time. The control-command calculator 104 may calculate a power-running command and a brake command for the train to travel to a next station in accordance with the target speed and the travel schedule.

The speed position detector 120 receives a pulse signal from the TG 150 and the point information from the ground element 11 via the on-train element 151 and detects the speed and position of the train 30 from the pulse signal and the point information.

The on-vehicle ATC device 140 outputs to the driving/braking control device 130, separately from the control-command calculator 104, a brake command for inhibiting the train 30 from coming too close to a preceding train 30P or inhibiting the train 30 from exceeding the speed. Upon receiving a signal indication from the ATC ground device 20 via the receiver 152, the on-vehicle ATC device 140 compares the speed limit based on the signal indication with the speed of the train 30 detected by the speed position detector 120. When the speed of the train 30 exceeds the speed limit, the on-vehicle ATC device 140 outputs a brake command to the driving/braking control device 130.

The driving/braking control device 130 controls the air brake device 160 or the motor 161 in accordance with a brake command from the on-vehicle ATC device 140, a power-running command and a brake command from the control-command calculator 104 of the train control device 100, and a power-running command and a brake command from a master controller (hereinafter referred to as master) that a train operator operates.

Next, the following will describe the operation of the train control device 100 under automatic stop-position control over the train 30 to stop at a target stop position.

A target deceleration pattern BP for use in the automatic stop-position control of the train 30 may be stored in advance for each station in the storage 101 and read or may be calculated by the control-command calculator 104 at the time of departing a station or approaching a next station.

In the following, thus, the control-command calculator 104 calculates the target deceleration pattern BP by combining the characteristic parameter PR and the deceleration characteristic model MD, prior to the train automatic stop-position control.

Then, when the train 30 approaches a next station of arrival, traveling between stations, the control-command calculator 104 starts the train automatic stop-position control.

In this case, until the train 30 approaches the next station of arrival (before the train automatic stop-position control), the train operator may operate the master to output the power-running command and brake command. Alternatively, until the train 30 approaches the next station of arrival, the control-command calculator 104 may calculate the power-running command and brake command for the train 30 to follow a target speed set under the speed limit, or may calculate the power-running command and brake command according to the travel schedule.

The control-command calculator 104 determines start of the train automatic stop-position control as in any of the following (1) to (3), for example, and starts the control based on a result of the determination.
(1) Determination on whether a remaining distance to the target stop position in the next stop is less than or equal to a certain value
(2) Determination on whether the speed and position of the train detected by the speed position detector 120 have approached the target deceleration pattern BP
(3) Determination on whether a stop position, which is estimated from the speed and position of the train detected by the speed position detector 120 and from a certain brake command, is close to the target stop position

Upon start of the train automatic stop-position control, the control-command calculator 104 calculates, in each control period, a brake command for stopping the train at the target stop position from positional deviation from a target deceleration pattern, by the following procedure.

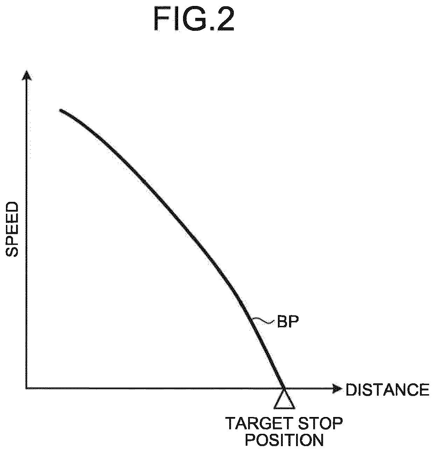

FIG. 2 illustrates a relationship between the target deceleration pattern and the train automatic stop-position control.

The target deceleration pattern BP illustrated in FIG. 2 represents a trajectory (speed-distance curve) at a certain deceleration or at a deceleration by a certain brake command, the trajectory which is calculated in advance by the control-command calculator 104 as distance (position) and speed data at a certain time interval while traveling back in time from the target stop position.

After adjusting the characteristic parameter PR (= the first characteristic parameter PR1 and the second characteristic parameter PR2) depending on the actual deceleration of the train 30, the control-command calculator 104 generates a target deceleration pattern by a certain brake command. Thereby, the control-command calculator 104 can reduce the number of changes of the brake command at the time of deceleration, following the target deceleration pattern BP.

Next, actual operation procedure in the first embodiment will be described.

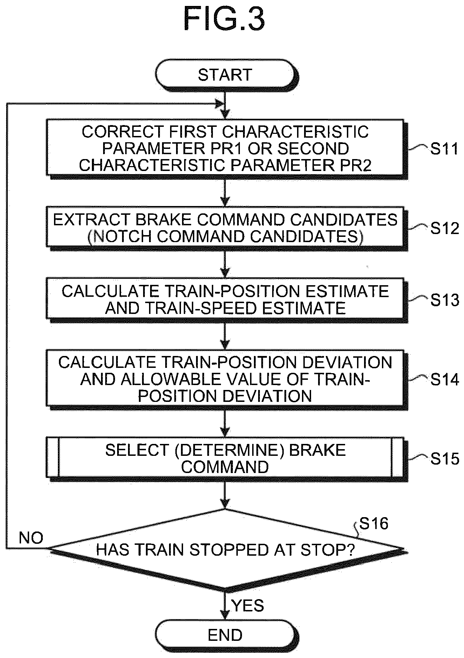

FIG. 3 is a flowchart of processing of the first embodiment.

First, the characteristic-parameter adjuster 106 corrects the first characteristic parameter PR1 or the second characteristic parameter PR2 indicating the effectiveness of the brake, in accordance with the brake command output from the control-command calculator 104, the transition of speed contained in the speed and positional information detected by the speed position detector 120, and the regeneration valid signal obtained from the driving/braking control device 130 via the brake determiner 107 (Step S11).

Next, the control-command calculator 104 extracts candidates for a brake command and a power-running command whose amount of change in a brake command value and a power-running command value from the currently output brake command and power-running command or amount of change in acceleration or deceleration falls within an allowable range (Step S12).

For extracting the brake command candidates, while outputting a power-running command immediately after starting the train automatic stop-position control, the control-command calculator 104 excludes higher power-running commands (power-running commands for larger drive force) than the currently output power-running command from the candidates. While outputting a brake command or a coasting command (no output of a power-running command and a brake command), the control-command calculator 104 excludes higher power-running commands than the coasting command (for larger drive force than the drive force at the time of the coasting command) from the candidates.

Then, the control-command calculator 104 estimates the behavior of the train in the case of outputting each brake command candidate for a first certain time as an actual brake command, on the basis of the speed and the position of the train 30 detected by the speed position detector 120, the route information read from the storage 101, the vehicle information read from the vehicle-characteristic model storage 102, and the characteristic parameter PR read from the characteristic-parameter storage 103, to thereby calculate a train-position estimate and a train-speed estimate (Step S13).

The first certain time is defined as a value greater than or equal to a response delay of the deceleration with respect to the change of the brake command.

When the brake determiner 107 determines that the regenerative brake is in operation from the ON state of the regeneration valid signal, the control-command calculator 104 estimates the behavior of the train 30 from the first deceleration characteristic model MD1 and the first characteristic parameter PR1.

Meanwhile, when the brake determiner 107 determines that the air brake is in operation from Off state of the regeneration valid signal, the control-command calculator 104 estimates the behavior of the train 30 from the second deceleration characteristic model MD2 and the second characteristic parameter PR2.

Next, the control-command calculator 104 finds a position on the target deceleration pattern BP which exhibits the same speed as the train-speed estimate, and calculates a deviation of the train position by subtracting the found position from the train-position estimate. It further calculates an allowable value of the positional deviation by multiplying the train-speed estimate by a second certain time (Step S14).

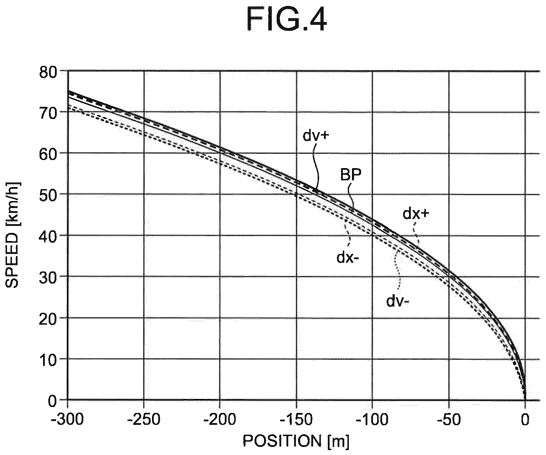

FIG. 4 illustrates an exemplary setting of the allowable value of positional deviation.

The second certain time may be set to different values depending on the deviation values of the train position with respect to the position on the target deceleration pattern BP which exhibits the same speed as the train-speed estimate. Positive deviation values (excessive side) of the train position indicate that a train-position estimate is farther than the position on the target deceleration pattern BP. Negative deviation values (insufficient side) indicate that the train-position estimate is closer than the position on the target deceleration pattern BP. The second certain time may be set to different values for the excessive side and the insufficient side, for example, 0.5 seconds for the excessive side and 1.0 second for the insufficient side.

As illustrated in FIG. 4, the positional-deviation allowable value is set to the same speed of the target deceleration pattern BP as the train-speed estimate + (speed) × 0.5 seconds for the excessive-side (= excessive-side position-deviation allowable value curve dx+) and set to the same - (speed) × 1.0 second for the insufficient-side (= insufficient-side position- deviation allowable value curve dx-). Under the conventional speed following control, the positional-deviation allowable value is set to the same speed of the target deceleration pattern BP as the train-speed estimate +1 km/h for the excessive-side (= excessive-side speed-deviation allowable value curve dv+) and the same - 2 km/h for the insufficient-side (= insufficient-side speed-deviation allowable value curve dv-). It can be thus seen that the ranges of allowable deviation of the present embodiment and the conventional speed following control substantially match each other.

Then, the control-command calculator 104 compares the calculated positional deviation with the positional-deviation allowable value to select a brake command (Step S15), and determines whether the train has stopped at a stop (Step S16). When the train has not stopped at a stop, the processing returns to Step S11.

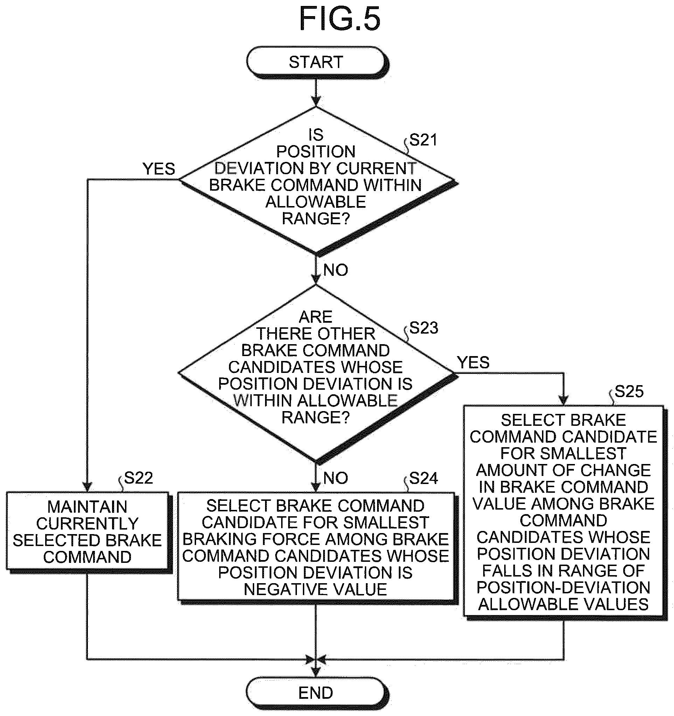

FIG. 5 is a flowchart of a brake-command selecting process.

First, the control-command calculator 104 compares the positional deviation with the positional-deviation allowable value to determine whether the positional deviation by the current brake command falls within the positional-deviation allowable value range (Step S21).

When determining that the positional deviation by the current brake command falls within the positional-deviation allowable value range at Step S21 (Yes at Step S21), the control-command calculator 104 continuously maintains the current brake command without necessity to select a brake command again (Step S22) and ends the process.

When determining that the positional deviation by the current brake command falls outside the positional-deviation allowable value range at Step S21 (No at Step S21), the control-command calculator 104 determines whether there are candidates, among the brake-command candidates, whose amount of change in the brake command value from the currently output brake command or amount of change in the acceleration or deceleration falls within the allowable range (Step S23).

When determining at Step S23 that there are brake command candidates with the positional deviation falling in the positional-deviation allowable value range (Yes at Step S23), the control-command calculator 104 selects one, among the brake command candidates with the positional deviation falling in the positional-deviation allowable value range, whose amount of change in the brake command value from the current brake command value is smallest (Step S25).

When determining that there is no brake command candidate with the positional deviation falling in the positional-deviation allowable value range (No at Step S23), the control-command calculator 104 selects, among the brake command candidates with the positional deviation at the same speed not exceeding the position of the target deceleration pattern BP on the insufficient-side (negative value), a brake command candidate having a smallest braking force (highest brake command candidate on the power-running side) (Step S24).

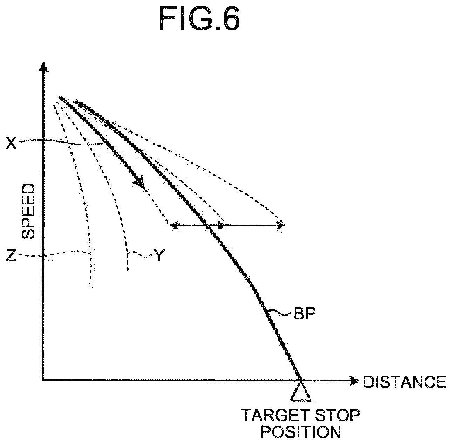

FIG. 6 illustrates an example of selected brake command candidates.

In the example in FIG. 6, specifically, there are brake command candidates X, Y, and Z with the positional deviation at the same speed not exceeding the position of the target deceleration pattern BP on the insufficient-side (negative value). The brake command candidate X is to be selected.

As in the foregoing, according to the first embodiment, the brake command candidates are selected based on the positional deviation with respect to the target deceleration pattern from the beginning of the train automatic stop-position control. Thereby, it is possible to select the brake command that allows an error in the stop position to fall within an allowable range, from the timing at which the train-speed estimate becomes 0 km/h. With no need for switching of the control methods, it is made possible to provide a train control device that does not disrupt the notch operation during the station stop control, preventing deterioration of passengers' comfortability on the train. Moreover, the control methods can be reduced to one from two, which can attain the reduction in time and effort in adjusting the control parameters and the simplification of the software configuration.

### Second Embodiment

Next, a second embodiment will be described with reference to the accompanying drawings.

A train control system of the second embodiment is similar to the train control system illustrated in FIG. 1, therefore, the same detailed description will apply thereto.

The second embodiment differs from the first embodiment in that time deviation is taken into consideration in addition to the positional deviation.

Next, actual processing in the second embodiment will be described.

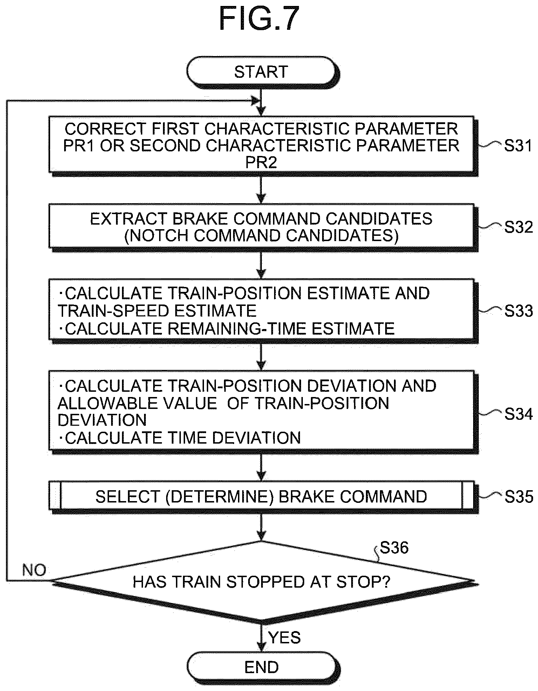

FIG. 7 is a flowchart of the processing in the second embodiment.

First, as with the first embodiment, the control-command calculator 104 corrects the first characteristic parameter PR1 or the second characteristic parameter PR2 indicating the effectiveness of the brake (Step S31), and extracts brake command candidates whose amount of change in the brake command value from the currently output brake command fall or amount of change in acceleration or deceleration falls within the allowable range (Step S32).

Then, as with the first embodiment, on the basis of the speed and the position of the train 30 detected by the speed position detector 120, the route information read from the storage 101, the vehicle information read from the vehicle-characteristic model storage 102, and the characteristic parameter PR read from the characteristic-parameter storage 103, the control-command calculator 104 estimates the behavior of the train in the case of outputting each brake command candidate for the first certain time as an actual brake command, to thereby calculate a train-position estimate and a train-speed estimate. The control-command calculator 104 finds a required period of time (pattern remaining time) on the target-deceleration pattern from the position on the target-deceleration pattern corresponding to the train-position estimate to the target stop position, and calculates the time deviation by subtracting the required period of time from an estimated remaining-time value (Step S33). The remaining-time estimate refers to a value found by subtracting "elapsed time from departure + the first certain time" from a certain inter-station traveling time, and the lower limit value thereof is set to zero second.

In this case, the upper limit value of the time deviation is set to the pattern remaining time. The storage 101 stores a preset time-deviation allowable value in advance. The time-deviation allowable value can be set, for example, to different values for early arrival and for late arrival, such as 10 seconds for early arrival and 5 seconds for late arrival.

Then, as with the first embodiment, the control-command calculator 104 finds a position on the target deceleration pattern BP at which the speed coincides with the train-speed estimate, and calculates the positional deviation of the train by subtracting the found position from the train-position estimate. The control-command calculator 104 further calculates the positional-deviation allowable value by multiplying the train-speed estimate by the second certain time, and calculates the time deviation in the second embodiment (Step S34).

The time deviation is calculated by finding the required period of time (pattern remaining time) on the target deceleration pattern from the position on the target-deceleration pattern corresponding to the train-position estimate to the target stop position, and by subtracting the required period of time from the remaining-time estimate.

Then, the control-command calculator 104 compares the calculated positional deviation with the positional-deviation allowable value and compares the calculated time deviation with a time-deviation allowable value stored in advance, to select and decides a brake command in the following procedure (Step S35), and determines whether the train has stopped at a stop (Step S36). When the train has not stopped at a stop, the processing returns to Step S31.

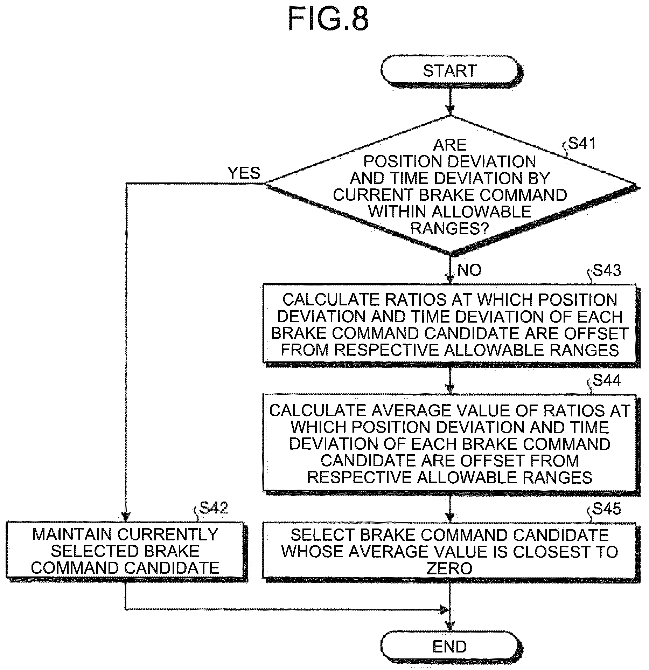

FIG. 8 is a flowchart of selecting brake commands in the second embodiment.

In the operation at Step S35, the control-command calculator 104 first compares the positional deviation with the positional-deviation allowable value to determine whether the positional deviation by the current brake command falls within the positional-deviation allowable value range (Step S41).

Upon determining at Step S41 that the positional deviation by the current brake command is within the positional-deviation allowable value range and the time deviation is within the time-deviation allowable value range (Yes at Step S41), the control-command calculator 104 continuously maintains the current brake command without the need to select a brake command again (Step S42) and ends the processing.

Upon determining at Step S41 that the positional deviation by the current brake command falls outside the positional-deviation allowable value range, the time deviation by the current brake command falls outside the time-deviation allowable value range, or both the positional deviation and the time deviation fall outside the deviation-allowable value ranges (No at Step S41), the control-command calculator 104 calculates the ratio at which the positional deviation of each brake command candidate is offset from the positional-deviation allowable value and the ratio at which the time deviation is offset from the time-deviation allowable value (Step S43).

Specifically, if the positional deviation is 600 cm on the insufficient-side and the positional-deviation allowable value of the insufficient-side is 500 cm, the ratio at which the positional deviation is offset from the positional-deviation allowable value is found by (600 - 500)/500 × 100 = 20%, for example. If the positional deviation is 400 cm on the insufficient-side and the positional-deviation allowable value of the insufficient-side is 500 cm, the positional deviation does not fall outside the positional-deviation allowable value, therefore, the ratio of the positional deviation offset from the positional-deviation allowable value is set to 0%.

Similarly, if the time deviation is 20 seconds on the insufficient-side and the time-deviation allowable value of the insufficient-side is 15 seconds, the ratio at which the time deviation is offset from the time-deviation allowable value is found by (20 - 15)/15 × 100 = 33%, for example. If the time deviation is 10 seconds on the insufficient-side and the time-deviation allowable value of the insufficient-side is 15 seconds, the time deviation does not fall outside the time-deviation allowable value, therefore, the ratio of the time deviation offset from the time-deviation allowable value is set to 0%.

Subsequently, the control-command calculator 104 calculates an average value of the ratio at which the positional deviation is offset from the positional-deviation allowable value and the ratio at which the time deviation is offset from the time-deviation allowable value (Step S44).

The control-command calculator selects, from the brake command candidates, a brake command candidate exhibiting the average of the ratios, at which the positional deviation is offset from the positional-deviation allowable value and at which the time deviation is offset from the time-deviation allowable value, closest to zero, and ends the processing (Step S45).

As in the foregoing, according to the second embodiment, the lower limit value of the remaining-time estimate is set to zero second and the upper limit value of the time deviation is set to the pattern remaining time. This can decrease the range of possible values of the time deviation as the train approaches the target stop position, allowing the time deviation to fall in the range of the time-deviation allowable values.

Thus, in the vicinity of the target stop position, the brake commands can be selected in consideration of accuracy of the stop position alone, and the accuracy of stop position can be prevented from decreasing due to the consideration of the time deviation.

Upon additionally considering the time deviation, it is possible to not only prevent the deterioration of passengers' comfortability due to disrupted notch operation during the station stop control but also select brake commands upon considering both punctuality and the performance of following the target deceleration pattern, which can thereby prevent early arrival or late arrival of the train.

According to the first and second embodiments, the train control system can calculate proper brake commands, thereby preventing the deterioration of the accuracy of stop position and passengers' comfortability on the train. This enables the train to stably stop irrespective of the train operators' skills, to improve the passengers' comfortability by stable train operation and to alleviate the burdens on the train operators in performing the stop control.

While a number of embodiments of the present invention have been exemplified in the foregoing, those embodiments are presented as mere examples and are not intended to limit the scope of the invention. Those novel embodiments described herein may be embodied in various other forms, and various omissions, substitutions, and modifications can be made without departing from the scope of the invention as defined in the appended claims.

## Claims

1. A train control device (100) comprising:
a train-speed position detector (120) configured to detect a speed and a position of a train (30) that includes a driving and braking control device (130) for controlling driving and braking of the train; and
a control-command calculator (104) configured to calculate a positional deviation of the train on the basis of a result of the detection of the train-speed position detector (120), a train-speed estimate, a train-position estimate, and a certain target deceleration pattern (BP), and to select a control command for the driving and braking control device (130) on the basis of the calculated positional deviation, the train-speed estimate being an estimated value of the speed of the train after a certain length of time, the train-position estimate being an estimated value of the position of the train after the certain length of time, the certain target deceleration pattern (BP) being preset for stopping the train at a target stop position,
wherein the positional deviation is a deviation between the train-position estimate and a train position on the target deceleration pattern (BP) corresponding to the train-speed estimate after the certain length of time,
wherein the control-command calculator is configured to determine the train-position estimate and the train-speed estimate for brake control command candidates,
wherein the control-command calculator (104) selects a brake control command from a plurality of brake control command candidates such that the positional deviation falls within a certain allowable range, and
wherein the control-command calculator (104) sets the allowable range to a narrower range as a speed indicated by the target deceleration pattern (BP) decreases.

2. The train control device (100) according claim 1, wherein
when the positional deviation for the brake command candidates does not fall within the allowable range, the control-command calculator (104) selects a control command for a largest driving force or a smallest braking force from among the control commands whose train-position estimates are before the train position on the target deceleration pattern (BP) corresponding to the train-speed estimate after the certain length of time.

3. The train control device (100) according claim 1, wherein
the control-command calculator (104) selects the control command on the basis of a time deviation from the target deceleration pattern (BP).

4. The train control device (100) according claim 3, wherein
the time deviation is a deviation between a required length of time and a remaining-time estimate after the certain length of time, the required length of time corresponding to the deceleration pattern to a target stop position from the train position on the target deceleration pattern (BP) corresponding to the train-position estimate after the certain length of time.

5. The train control device (100) according claim 3, wherein
the control-command calculator (104) selects the control command such that the positional deviation and the time deviation fall within respective allowable ranges,
wherein, when unable to select the control command such that the positional deviation and the time deviation fall within the respective allowable ranges, the control-command calculator (104) selects a control command on the basis of a ratio at which the positional deviation is offset from the allowable range and a ratio at which the time deviation is offset from the allowable range.

6. The train control device (100) according claim 1, wherein
the control-command calculator (104) selects the control command such that an amount of change in the control command or in acceleration or deceleration of the train falls within a certain range.

7. The train control device (100) according claim 3, wherein
the control command is a notch output, and
the target deceleration pattern (BP) is generated from certain brake notches, the train control device further comprising:
a characteristic-parameter storage configured to store therein a deceleration characteristic model of the train; and
a characteristic-parameter adjuster configured to adjust the deceleration characteristic model stored in the characteristic-parameter storage on the basis of transition of the control command and the train speed.

8. A method to be executed by a train control device (100) that controls a train including a driving and braking control device (130) for controlling driving and braking, the method comprising:
detecting a speed and a position of the train;
calculating a positional deviation of the train on the basis of a result of the detection, a train-speed estimate, a train-position estimate, and a certain target deceleration pattern (BP), the train-speed estimate being an estimated value of the speed of the train after a certain length of time, the train-position estimate being an estimated value of the position of the train after the certain length of time, the certain target deceleration pattern (BP) being preset for stopping the train at a certain position,
wherein the positional deviation is a deviation between the train-position estimate and a train position on the target deceleration pattern (BP) corresponding to the train-speed estimate after the certain length of time,
determining the train-position estimate and the train-speed estimate for brake control command candidates,
selecting a brake control command from a plurality of brake control command candidates for the driving and braking control device (130) on the basis of the calculated positional deviation, and
setting the allowable range to a narrower range as a speed indicated by the target deceleration pattern decreases.

9. A computer program product including programmed instructions embodied in and stored on a non-transitory computer readable medium, wherein the instructions, when executed by a computer, cause a computer to control a train control device (100) that controls a train including a driving and braking control device (130) for controlling driving and braking, and cause the computer to perform:
detecting a speed and a position of the train;
calculating a positional deviation of the train on the basis of a result of the detection, a train-speed estimate, a train-position estimate, and a certain target deceleration pattern (BP), the train-speed estimate being an estimated value of the speed of the train after a certain length of time, the train-position estimate being an estimated value of the position of the train after the certain length of time, the certain target deceleration pattern (BP) being preset for stopping the train at a certain position,
wherein the positional deviation is a deviation between the train-position estimate and a train position on the target deceleration pattern (BP) corresponding to the train-speed estimate after the certain length of time,
determining the train-position estimate and the train-speed estimate for brake control command candidates,
selecting a brake control command from a plurality of brake control command candidates for the driving and braking control device on the basis of the calculated positional deviation, and
setting the allowable range to a narrower range as a speed indicated by the target deceleration pattern decreases.

## Patentansprüche

1. Zugsteuerungsvorrichtung (100), die Folgendes umfasst:
einen Zuggeschwindigkeitspositionsdetektor (120), der dazu ausgestaltet ist, eine Geschwindigkeit und eine Position eines Zugs (30) zu detektieren, der eine Antriebs- und Bremssteuerungsvorrichtung (130) zum Steuern des Antreibens und Bremsens des Zuges umfasst; und
einen Steuerungsbefehlsrechner (104), der dazu ausgestaltet ist, eine Positionsabweichung des Zugs basierend auf einem Ergebnis der Detektion des Zuggeschwindigkeitspositionsdetektors (120), einer Zuggeschwindigkeitsschätzung, einer Zugpositionsschätzung und einem bestimmten Zielverlangsamungsmuster (BP) zu berechnen und einen Steuerungsbefehl für die Antriebs- und Bremssteuerungsvorrichtung (130) basierend auf der berechneten Positionsabweichung auszuwählen, wobei die Zuggeschwindigkeitsschätzung ein Schätzwert der Geschwindigkeit des Zugs nach einer bestimmten Zeitdauer ist, die Zugpositionsschätzung ein Schätzwert der Position des Zugs nach der bestimmten Zeitdauer ist und das bestimmte Zugzielverlangsamungsmuster (BP) zum Anhalten des Zugs an einer Zielanhalteposition voreingestellt ist,
wobei die Positionsabweichung eine Abweichung zwischen der Zugpositionsschätzung und einer Zugposition auf dem bestimmten Zielverlangsamungsmuster (BP) entsprechend der Zuggeschwindigkeitsschätzung nach der bestimmten Zeitdauer ist,
wobei der Steuerungsbefehlsrechner dazu ausgestaltet ist, die Zugpositionsschätzung und die Zuggeschwindigkeitsschätzung für Bremssteuerungsbefehlskandidaten zu bestimmen,
wobei der Steuerungsbefehlsrechner (104) einen Bremssteuerungsbefehl derart von mehreren Bremssteuerungsbefehlskandidaten auswählt, dass die Positionsabweichung in einen bestimmten zulässigen Bereich fällt, und
wobei der Steuerungsbefehlsrechner (104) den zulässigen Bereich bei einer abnehmenden, durch das Zielverlangsamungsmuster (BP) angegebenen Geschwindigkeit auf einen schmaleren Bereich einstellt.

2. Zugsteuerungsvorrichtung (100) nach Anspruch 1, wobei
wenn die Positionsabweichung für die Bremsbefehlskandidaten nicht in den zulässigen Bereich fällt, der Steuerungsbefehlsrechner (104) einen Steuerungsbefehl für eine größte Antriebskraft oder eine kleinste Bremskraft von den Steuerungsbefehlen auswählt, deren Zugpositionsschätzungen vor der Zugposition auf dem Zielverlangsamungsmuster (BP) entsprechend der Zuggeschwindigkeitsschätzung nach der bestimmten Zeitdauer liegen.

3. Zugsteuerungsvorrichtung (100) nach Anspruch 1, wobei
der Steuerungsbefehlsrechner (104) den Steuerungsbefehl basierend auf einer Zeitabweichung von dem Zielverlangsamungsmuster (BP) auswählt.

4. Zugsteuerungsvorrichtung (100) nach Anspruch 3, wobei
die Zeitabweichung eine Abweichung zwischen einer erforderlichen Zeitdauer und einer Schätzung der verbleibenden Zeit nach der bestimmten Zeitdauer ist, wobei die erforderliche Zeitdauer dem Verlangsamungsmuster zu einer Zielanhalteposition von der Zugposition auf dem Zielverlangsamungsmuster (BP) entsprechend der Zugpositionsschätzung nach der bestimmten Zeitdauer entspricht.

5. Zugsteuerungsvorrichtung (100) nach Anspruch 3, wobei
der Steuerungsbefehlsrechner (104) den Steuerungsbefehl derart auswählt, dass die Positionsabweichung und die Zeitabweichung in entsprechende zulässige Bereiche fallen,
wobei, wenn der Steuerungsbefehlsrechner (104) nicht in der Lage ist, den Steuerungsbefehl derart auszuwählen, dass die Positionsabweichung und die Zeitabweichung in die entsprechenden zulässigen Bereiche fallen, er einen Steuerungsbefehl basierend auf einem Verhältnis, bei dem die Positionsabweichung von dem zulässigen Bereich versetzt ist, und einem Verhältnis auswählt, bei dem die Zeitabweichung von dem zulässigen Bereich versetzt ist.

6. Zugsteuerungsvorrichtung (100) nach Anspruch 1, wobei
der Steuerungsbefehlsrechner (104) den Steuerungsbefehl derart auswählt, dass ein Änderungsbetrag beim Steuerungsbefehl oder bei der Beschleunigung oder Verlangsamung des Zugs in einen bestimmten Bereich fällt.

7. Zugsteuerungsvorrichtung (100) nach Anspruch 3, wobei
der Steuerungsbefehl eine Stufenausgabe ist, und
das Zielverlangsamungsmuster (BP) von bestimmten Bremsstufen erzeugt wird, wobei die Zugsteuerungsvorrichtung ferner Folgendes umfasst:
einen Kennlinienparameterspeicher, der dazu ausgestaltet ist, ein Verlangsamungskennlinienmodell des Zugs darin zu speichern; und
eine Kennlinienparameter-Anpassungseinrichtung, die dazu ausgestaltet ist, das in dem Kennlinienparameterspeicher gespeicherte Verlangsamungskennlinienmodel basierend auf einem Übergang des Steuerungsbefehls und der Zuggeschwindigkeit anzupassen.

8. Verfahren zur Ausführung durch eine Zugsteuerungsvorrichtung (100), die einen Zug steuert, der eine Antriebs- und Bremssteuerungsvorrichtung (130) zum Steuern des Antreibens und Bremsens umfasst,
wobei das Verfahren Folgendes umfasst:
Detektieren einer Geschwindigkeit und einer Position des Zugs;
Berechnen einer Positionsabweichung des Zugs basierend auf einem Ergebnis der Detektion, einer Zuggeschwindigkeitsschätzung, einer Zugpositionsschätzung und einem bestimmten Zielverlangsamungsmuster (BP), wobei die Zuggeschwindigkeitsschätzung ein Schätzwert der Geschwindigkeit des Zugs nach einer bestimmten Zeitdauer ist, die Zugpositionsschätzung ein Schätzwert der Position des Zugs nach der bestimmten Zeitdauer ist und das bestimmte Zugzielverlangsamungsmuster (BP) zum Anhalten des Zugs an einer bestimmten Position voreingestellt ist,
wobei die Positionsabweichung einer Abweichung zwischen der Zugpositionsschätzung und einer Zugposition auf dem Zielverlangsamungsmuster (BP) entsprechend der Zuggeschwindigkeitsschätzung nach der bestimmten Zeitdauer entspricht,
Bestimmen der Zugpositionsschätzung und der Zuggeschwindigkeitsschätzung für Bremssteuerungsbefehlskandidaten,
Auswählen eines Bremssteuerungsbefehls von mehreren Bremssteuerungsbefehlskandidaten für die Antriebs- und Bremssteuerungsvorrichtung (130) basierend auf der berechneten Positionsabweichung, und
Einstellen des zulässigen Bereichs auf einen schmaleren Bereich bei einer abnehmenden, durch das Zielverlangsamungsmuster angegebenen Geschwindigkeit.

9. Computerprogrammprodukt, das programmierte Anweisungen umfasst, die auf einem nichtflüchtigen maschinenlesbaren Datenträger ausgeführt und gespeichert sind, wobei die Anweisungen, wenn sie durch einen Computer ausgeführt werden, bewirken, dass ein Computer eine Zugsteuerungsvorrichtung (100) steuert, die einen Zug steuert, der eine Antriebs- und Bremssteuerungsvorrichtung (130) zum Steuern des Antreibens und Bremsens umfasst, und bewirken, dass der Computer Folgendes durchführt:
Detektieren einer Geschwindigkeit und einer Position des Zugs;
Berechnen einer Positionsabweichung des Zugs basierend auf einem Ergebnis der Detektion, einer Zuggeschwindigkeitsschätzung, einer Zugpositionsschätzung und einem bestimmten Zielverlangsamungsmuster (BP), wobei die Zuggeschwindigkeitsschätzung ein Schätzwert der Geschwindigkeit des Zugs nach einer bestimmten Zeitdauer ist, die Zugpositionsschätzung ein Schätzwert der Position des Zugs nach der bestimmten Zeitdauer ist und das bestimmte Zugzielverlangsamungsmuster (BP) zum Anhalten des Zugs an einer bestimmten Position voreingestellt ist,
wobei die Positionsabweichung eine Abweichung zwischen der Zugpositionsschätzung und einer Zugposition auf dem Zielverlangsamungsmuster (BP) entsprechend der Zuggeschwindigkeitsschätzung nach der bestimmten Zeitdauer ist,
Bestimmen der Zugpositionsschätzung und der Zuggeschwindigkeitsschätzung für Bremssteuerungsbefehlskandidaten,
Auswählen eines Bremssteuerungsbefehls von mehreren Bremssteuerungsbefehlskandidaten für die Antriebs- und Bremssteuerungsvorrichtung basierend auf der berechneten Positionsabweichung, und
Einstellen des zulässigen Bereichs auf einen schmaleren Bereich bei einer abnehmenden, durch das Zielverlangsamungsmuster angegebenen Geschwindigkeit.

## Revendications

1. Dispositif de commande de train (100) comprenant :
un détecteur de vitesse et de position de train (120) configuré pour détecter une vitesse et une position d'un train (30) qui inclut un dispositif de commande d'entraînement et de freinage (130) pour commander l'entraînement et le freinage du train ; et
un calculateur d'ordre de commande (104) configuré pour calculer un écart de position du train sur la base d'un résultat de la détection du détecteur de vitesse et de position de train (120), d'une estimation de vitesse de train, d'une estimation de position de train, et d'un certain motif de décélération cible (BP), et pour sélectionner un ordre de commande pour le dispositif de commande d'entraînement et de freinage (130) sur la base de l'écart de position calculé, l'estimation de vitesse de train étant une valeur estimée de la vitesse du train après une certaine durée, l'estimation de position de train étant une valeur estimée de la position du train après la certaine durée, le certain motif de décélération cible (BP) étant préréglé pour arrêter le train à une position d'arrêt cible,
dans lequel l'écart de position est un écart entre l'estimation de position de train et une position de train sur le motif de décélération cible (BP) correspondant à l'estimation de vitesse de train après la certaine durée,
dans lequel le calculateur d'ordre de commande est configuré pour déterminer l'estimation de position de train et l'estimation de vitesse de train pour des candidats d'ordre de commande de frein,
dans lequel le calculateur d'ordre de commande (104) sélectionne un ordre de commande de frein parmi une pluralité de candidats d'ordre de commande de frein de sorte que l'écart de position se trouve à l'intérieur d'une certaine plage admissible, et
dans lequel le calculateur d'ordre de commande (104) règle la plage admissible à une plage plus étroite au fur et à mesure qu'une vitesse indiquée par le motif de décélération cible (BP) diminue.

2. Dispositif de commande de train (100) selon la revendication 1, dans lequel
lorsque l'écart de position pour les candidats d'ordre de frein ne se trouve pas l'intérieur de la plage admissible, le calculateur d'ordre de commande (104) sélectionne un ordre de commande pour une force motrice la plus grande ou une force motrice la plus petite parmi les ordres de commande pour lesquels les estimations de position de train sont avant la position de train sur le motif de décélération cible (BP) correspondant à l'estimation de vitesse de train après la certaine durée.

3. Dispositif de commande de train (100) selon la revendication 1, dans lequel
le calculateur d'ordre de commande (104) sélectionne l'ordre de commande sur la base d'un écart de temps par rapport au motif de décélération cible (BP).

4. Dispositif de commande de train (100) selon la revendication 3, dans lequel
l'écart de temps est un écart entre une durée requise et une estimation de temps restant après la certaine durée, la durée requise correspondant au motif de décélération jusqu'à une position d'arrêt cible à partir de la position de train sur le motif de décélération cible (BP) correspondant à l'estimation de position de train après la certaine durée.

5. Dispositif de commande de train (100) selon la revendication 3, dans lequel
le calculateur d'ordre de commande (104) sélectionne l'ordre de commande de sorte que l'écart de position et l'écart de temps se trouvent à l'intérieur de plages admissibles respectives,
dans lequel, lorsqu'il est impossible de sélectionner l'ordre de commande de sorte que l'écart de position et l'écart de temps se trouvent à l'intérieur des plages admissibles respectives, le calculateur d'ordre de commande (104) sélectionne un ordre de commande sur la base d'un rapport auquel l'écart de position est décalé par rapport à la plage admissible et d'un rapport auquel l'écart de temps est décalé par rapport à la plage admissible.

6. Dispositif de commande de train (100) selon la revendication 1, dans lequel
le calculateur d'ordre de commande (104) sélectionne l'ordre de commande de sorte qu'une quantité de changement de l'ordre de commande ou d'une accélération ou d'une décélération du train se trouve à l'intérieur d'une certaine plage.

7. Dispositif de commande de train (100) selon la revendication 3, dans lequel
l'ordre de commande est une sortie de découpe, et
le motif de décélération cible (BP) est généré à partir de certaines découpes de frein, le dispositif de commande de train comprenant en outre :
un stockage de paramètres de caractéristiques configuré pour stocker, à l'intérieur de celui-ci, un modèle de caractéristiques de décélération du train ; et
un ajusteur de paramètres de caractéristiques configuré pour ajuster le modèle de caractéristiques de décélération stocké dans le stockage de paramètres de caractéristiques sur la base d'une transition de l'ordre de commande et de la vitesse de train.

8. Procédé à exécuter par un dispositif de commande de train (100) qui commande un train incluant un dispositif de commande d'entraînement et de freinage (130) pour commander l'entraînement et le freinage, le procédé comprenant :
la détection d'une vitesse et d'une position du train ;
le calcul d'un écart de position du train sur la base d'un résultat de la détection, d'une estimation de vitesse de train, d'une estimation de position de train, et d'un certain motif de décélération cible (BP), l'estimation de vitesse de train étant une valeur estimée de la vitesse du train après une certaine durée, l'estimation de position de train étant une valeur estimée de la position du train après la certaine durée, le certain motif de décélération cible (BP) étant préréglé pour arrêter le train à une certaine position,
dans lequel l'écart de position est un écart entre l'estimation de position de train et une position de train sur le motif de décélération cible (BP) correspondant à l'estimation de vitesse de train après la certaine durée,
la détermination de l'estimation de position de train et de l'estimation de vitesse de train pour des candidats d'ordre de commande de frein,
la sélection d'un ordre de commande de frein parmi une pluralité de candidats d'ordre de commande de frein pour le dispositif de commande d'entraînement et de freinage (130) sur la base de l'écart de position calculé, et
le réglage de la plage admissible à une plage plus étroite au fur et à mesure qu'une vitesse indiquée par le motif de décélération cible diminue.

9. Produit programme informatique incluant des instructions programmées mises en oeuvre et stockées dans un support non transitoire lisible par ordinateur, dans lequel les instructions, lorsqu'elles sont exécutées par un ordinateur, amènent un ordinateur à commander un dispositif de commande de train (100) qui commande un train incluant un dispositif de commande d'entraînement et de freinage (130) pour commander l'entraînement et le freinage, et amènent l'ordinateur à réaliser :
la détection d'une vitesse et d'une position du train ;
le calcul d'un écart de position du train sur la base d'un résultat de la détection, d'une estimation de vitesse de train, d'une estimation de position de train, et d'un certain motif de décélération cible (BP), l'estimation de vitesse de train étant une valeur estimée de la vitesse du train après une certaine durée, l'estimation de position de train étant une valeur estimée de la position du train après la certaine durée, le certain motif de décélération cible (BP) étant préréglé pour arrêter le train à une certaine position,
dans lequel l'écart de position est un écart entre l'estimation de position de train et une position de train sur le motif de décélération cible (BP) correspondant à l'estimation de vitesse de train après la certaine durée,
la détermination de l'estimation de position de train et de l'estimation de vitesse de train pour des candidats d'ordre de commande de frein,
la sélection d'un ordre de commande de frein parmi une pluralité de candidats d'ordre de commande de frein pour le dispositif de commande d'entraînement et de freinage sur la base de l'écart de position calculé, et
le réglage de la plage admissible à une plage plus étroite au fur et à mesure qu'une vitesse indiquée par le motif de décélération cible diminue.
